# EUROPÄISCHE PATENTSCHRIFT

(11) **EP 0 909 690 B1**
(45) Veröffentlichungstag und Bekanntmachung des Hinweises auf die Patenterteilung: **05.04.2006**
(21) Anmeldenummer: 98118969.9
(22) Anmeldetag: 07.10.1998
(51) Int. Cl.: B60T 13/22, B60T 13/68

(54) **Bremssystem und Fahrzeug**
Brake system and vehicle
Système de freinage et véhicule

(30) Priorität: 17.10.1997 US 953561
(43) Veröffentlichungstag der Anmeldung: 21.04.1999
(73) Patentinhaber: DEERE & COMPANY, Moline, Illinois 61265-8098 (US); STERLING HYDRAULICS, INC., Schaumburg, Illinois 60173 (US)
(72) Erfinder: Diecke, Friedrich Konrad, Knoxville, Tennessee 37922 (US); Ward, Christopher Mark, Sycamore, Illinois 60178 (US); Stevens, Clyde Bennett, Columbus, Ohio 43209 (US)
(74) Vertreter: Magin, Ludwig Bernhard

(56) Entgegenhaltungen:
- EP-A- 0 367 038
- EP-A- 0 469 416
- WO-A-98/23474

## Beschreibung

Die Erfindung betrifft ein Bremssystem mit einer Bremssteuerungsvorrichtung mit wenigstens einem ersten Anschluß für eine Druckquelle, einem zweiten Anschluß für eine Abflußleitung und einem dritten Anschluß für wenigstens eine druckmittelbetätigbare Bremse und mit einem Druckbegrenzungsventil und ein Fahrzeug mit einem solchen Bremssystem.

In Bremssystemen von Fahrzeugen sind druckmittelbetätigbare Bremsen oftmals jeweils über ein Druckmittelsystem mit mehreren Ventilen ausgestattet, die über zahlreiche Druckmittelleitungen mit einer Druckquelle verbunden sind. Oftmals werden durch Federkraft schließbare und durch Druck zu öffnende Bremsen verwendet, um sicherzustellen, daß das Fahrzeug gebremst wird, wenn der Druck abfällt.

Die EP-A2-0 306 988 zeigt ein Hydrauliksystem für einen Lader, das ein Bremssystem mit hydraulischen Bremsen aufweist, wobei die Bremsen mit hydraulischen Betätigungselementen versehen sind. Von einer Versorgungsleitung aus wird Hydraulikflüssigkeit durch Hydraulikleitungen zu den Bremsen geleitet. Diese beiden parallel angeordneten Hydraulikleitungen weisen hydraulische Druckspeicher auf, die der Speicherung des hydraulischen Druckes dienen, wenn der Lader ausgeschaltet ist. Die Hydraulikflüssigkeit wird durch 5-Positionen-Ventile zu den hydraulischen Betätigungselementen geleitet.

Die EP-A1-0 552 649 zeigt ein Parkbremssteuersystem für eine durch Federkraft einrückbare und durch Hydraulikdruck lösbare Parkbremse, bei dem durch ein Parkbremssteuerventil wahlweise eine von der Fahrzeugantriebsmaschine angetriebene Hauptpumpe oder ein Reservoir an die Druckkammer der Parkbremse anschließbar ist. Es ist ferner eine zusätzliche Durckquelle in Form einer durch eine Bedienungsperson antreibbaren Hilfspumpe vorgesehen, die durch Ventilmittel wahlweise mit der Druckkammer verbindbar ist, um bei abgestellter Fahrzeugantriebsmaschine ein Lösen der Parkbremse zu ermöglichen.

In üblichen Bremssystemen an Fahrzeugen wird eine relativ große Zahl von Verbindungsstücken oder anderen Befestigungselementen benötigt, um die separaten Leitungen und Ventilkomponenten anzuschließen. Solche Systeme sind aufwendig und teuer und belegen oft viel wertvollen Raum in einem schlecht zugänglichen Fahrzeugbereich und sind schwierig anzubringen.

Das der Erfindung zugrunde liegende Problem wird darin gesehen, daß der Aufbau bekannter Bremssysteme nicht optimal ist.

Dieses Problem wird erfindungsgemäß durch die Lehre der Patentansprüche 1 und 8 gelöst, wobei in den weiteren Patentansprüchen die Lösung in vorteilhafter Weise weiterentwickelnde Merkmale aufgeführt sind.

Ein erfindungsgemäßes Bremssystem weist eine Bremssteuerungsvorrichtung mit wenigstens einem ersten Anschluß für eine Druckquelle, einem zweiten Anschluß für eine Abflußleitung und einem dritten Anschluß für wenigstens eine druckmittelbetätigbare Bremse und mit einem Druckbegrenzungsventil auf, das in einer Verbindung zwischen dem ersten Anschluß und dem zweiten Anschluß angeordnet ist, wobei der erste Anschluß und der dritte Anschluß stromaufwärts von dem Druckbegrenzungsventil liegen. Durch das zwischen dem ersten Anschluß und dem zweiten Anschluß angeordnete Druckbegrenzungsventil wird Druckmittel daran gehindert, unkontrolliert und drucklos über die Abflußleitung abzufließen. Das Druckbegrenzungsventil hält in der Bremssteuerungsvorrichtung immer einen vorbestimmbaren Haltedruck aufrecht, der auch an dem dritten Anschluß ansteht. Dies gilt auch dann, wenn die Druckquelle keinen Druck mehr liefert. Vorzugsweise sind dann Mittel, beispielsweise in Form eines oder mehrerer Rückschlagventile, vorzusehen, die einen Abfluß von Druckmittel in Richtung eines Druckmittelsystems unterbinden. Über den dritten Anschluß kann die Bremse unabhängig vom Betriebszustand der Druckquelle mit dem Haltedruck, beispielsweise zum Öffnen oder Schließen der Bremse, beaufschlagt werden, ohne daß hierzu aufwendige Druckspeicher vorzusehen sind. Als Druckquelle kann eine Pneumatikdruckquelle oder vorzugsweise eine Hydraulikdruckquelle beispielsweise eine Konstant- oder Verstellpumpe dienen.

Die Bremse kann einen einfach- oder doppeltwirkenden Bremszylinder aufweisen. Dieser Bremszylinder ist vorzugsweise federbelastet und wird durch die Federwirkung in einer seiner Stellungen, das heißt in einer eingefahrenen oder ausgefahrenen Position gehalten, wodurch die Bremse in einer geschlossenen oder geöffneten Stellung gehalten wird. Vorzugsweise wird der Bremszylinder durch die Federwirkung in eine Stellung gebracht, in der die Bremse angelegt ist, so daß bei ausgeschaltetem Motor und damit deaktivierter Druckquelle, wie auch bei einem Defekt, das Fahrzeug gebremst wird. Ist der Bremszylinder doppeltwirkend ausgeführt, weist er also wenigstens zwei Eingänge auf, vorzugsweise einen Eingang auf einer federbelasteten Seite und einen Eingang auf einer nicht belasteten Seite, so kann sowohl die eine wie auch die andere Seite mit dem an dem dritten Anschluß anstehenden Haltedruck beaufschlagt werden.

Weist die Bremssteuerungsvorrichtung ein Bremssteuerventil auf, das in einer Verbindung zwischen dem ersten Anschluß und dem dritten Anschluß angeordnet ist, so kann über dieses Bremssteuerventil gesteuert werden, ob und/oder mit welchem Druck die Bremse beaufschlagt wird. Weist die Bremse einen doppeltwirkenden Bremszylinder auf, so kann über das Drucksteuerventil gesteuert werden, ob und welche Seite des Bremszylinders mit Druck beaufschlagt wird. Vorzugsweise ist der Bremszylinder bzw. die Bremse zum Lösen so mit Druck zu beaufschlagen, daß dieser einer Feder, die die Bremse in einer betätigten Stellung hält, entgegenwirkt. Um die Bremse zu schließen, wird die Bremse nicht mehr mit Druck beaufschlagt, das heißt sie wird durch die Federwirkung geschlossen. Zusätzlich kann vorzugsweise der Eingang auf der federbelasteten Seite des Bremszylinders mit Druck beaufschlagt werden, so daß dieser die Wirkung der Feder unterstützt und die Bremse in einer geschlossenen Position hält. Das Bremssteuerventil ist vorzugsweise als ein elektromagnetisch betätigbares Ventil, beispielsweise als ein 4/2 Wegeventil ausgebildet. Es ist aber auch denkbar, das Ventil auf andere Weise beispielsweise manuell oder hydraulisch bzw. pneumatisch zu betätigen. Auch eine Kombination mehrerer Ventile, die möglicherweise auch noch weitere Funktionen eines Fahrzeugs steuern, ist vorstellbar. Vorzugsweise wird das Bremssteuerventil durch die Wirkung einer Feder in einer vordefinierten Ruhestellung gehalten, wenn das Bremssteuerventil nicht betätigt ist. In dieser Ruhestellung ist die Bremse vorzugsweise geschlossen, wodurch sichergestellt wird, daß das Fahrzeug bei einem Auftreten einer Fehlfunktion gebremst wird.

Die Bremse kann zusätzlich zu dem dritten Anschluß über einen vierten Anschluß mit der Bremssteuerungsvorrichtung verbindbar sein. So kann sowohl der Zufluß als auch der Abfluß von Druckmittel zu bzw. von der Bremse über die Bremssteuerungsvorrichtung erfolgen, wodurch die Zahl zusätzlicher Leitungen und Verbindungen niedrig gehalten werden kann. Vorzugsweise wird über das Bremssteuerventil bestimmt, ob und mit welchem Druck die Bremse bzw. die jeweiligen Seiten des Bremszylinders beaufschlagt werden. Liegt der vierte Anschluß stromabwärts von dem Druckbegrenzungsventil, so gewährleistet dies einen ungehinderten Abfluß von Druckmittel über diesen Anschluß, so daß die Bremse bzw. die jeweils mit dem vierten Anschluß verbundene Seite des Bremszylinders schnell von Druck entlastet werden kann.

Um den oftmals begrenzten Anbauraum an einer Maschine oder an einem Fahrzeug optimal zu nutzen oder um ein einfaches An- und Abbauen der Bremssteuerungsvorrichtung an schlecht zugänglichen Bereichen zu ermöglichen, kann die Bremssteuerungsvorrichtung in der Art eines Moduls ausgeführt werden. Das heißt, alle oder zumindest einige der Bestandteile der Bremssteuerungsvorrichtung sind in einem gemeinsamen Korpus untergebracht, wodurch Verbindungsleitungen und Anschlüsse eingespart werden. Durch den wegfall von Anschlüssen und Leitungen wird auch die Gefahr von Undichtigkeiten und damit von Verlust von Druckmittel verringert.

Eine noch kompaktere Bauweise ergibt sich, wenn auch das in Druckmittelsystemen üblicherweise vorgesehene Filter in das Modul integriert ist. Vorzugsweise wird das Filter als Einschraubfilter vorgesehen, so daß dieses in einen Korpus des Moduls eingeschraubt werden kann.

In der Bremssteuerungsvorrichtung bzw. in dem Modul kann ein Auffüllanschluß vorgesehen sein, durch den einem Druckmittelkreislauf vorzugsweise einem Antriebssystem Druckmittel zugeführt werden kann, um Verluste auszugleichen, die durch Undichtigkeiten u.a. hervorgerufen werden. Darüber hinaus kann die Bremssteuerungsvorrichtung ein Filterumgehungsventil aufweisen, das ebenfalls in das Modul integriert sein kann. Über dieses Filterumgehungsventil, das parallel zu dem Filter angeordnet ist, kann Druckmittel an dem Filter vorbeigelangen, wenn bestimmte Rahmenbedingungen gegeben sind, vorzugsweise wenn das Filter ganz oder teilweise verstopft ist und dadurch kein ausreichender Fluß von Hydraulikmedium mehr möglich ist. Das Filterumgehungsventil kann als federbelastetes Druckbegrenzungsventil ausgeführt sein, das öffnet, wenn ein vorbestimmter Druck im System überschritten wird.

Ein erfindungsgemäßes Bremssystem kann beispielsweise an Maschinen, wie beispielsweise an Werkzeugmaschinen und an Fahrzeugen, vorzugsweise aber an landwirtschaftlichen und industriellen Arbeitsfahrzeugen wie an Ackerschleppern, Erntemaschinen und Baufahrzeugen eingesetzt werden. Besonders günstig ist es, ein solches Bremssystem an Kompaktladern (Skid Steer Loader) zu verwenden, da bei diesen Fahrzeugen der zur Verfügung stehende Bauraum besonders eingeschränkt ist und daher optimal ausgenutzt werden muß. Solche Fahrzeuge weisen meist schon zur Betätigung von Druckmittelzylindern beispielsweise für Anbaueinrichtungen, Arbeitsgeräte etc. ein Druckmittel- bzw. Hydrauliksystem mit einer Druckquelle, eine üblicherweise zu einem Reservoir bzw. Vorratsbehälter führende Abflußleitung sowie eine druckmittelbetätigbare Bremse auf.

Ein erfindungsgemäßes Bremssystem eignet sich für den Einsatz in einem offenen Druckmittelkreislauf an einem Fahrzeug. Offene Druckmittelkreisläufe weisen häufig Druckquellen, die eine konstante Menge von Druckmittel fördern, allgemein als Konstantpumpen bezeichnet, auf. Solche Konstantpumpen sind aufgrund der fehlenden Verstellmöglichkeit kostengünstig.

Steht das Bremssystem mit einem geschlossenen Druckmittelkreislauf, beispielsweise einem hydrostatischen Antriebssystem, in Verbindung, so kann über das Bremssystem Druckmittel in den geschlossenen Druckmittelkreislauf nachgefüllt werden, um Verluste auszugleichen und um Bläschenbildung bzw. Kavitation zu vermeiden.

In der Zeichnung ist ein nachfolgend näher beschriebenes Ausführungsbeispiel der Erfindung dargestellt. Es zeigt:
- Fig. 1: einen schematischen Schaltplan eines Druckmittelsystems für ein Fahrzeug,
- Fig. 2: einen Schnitt durch eine als Modul ausgeführte Bremssteuerungsvorrichtung und
- Fig. 3: eine Rückansicht der Bremssteuerungsvorrichtung aus Fig. 2.

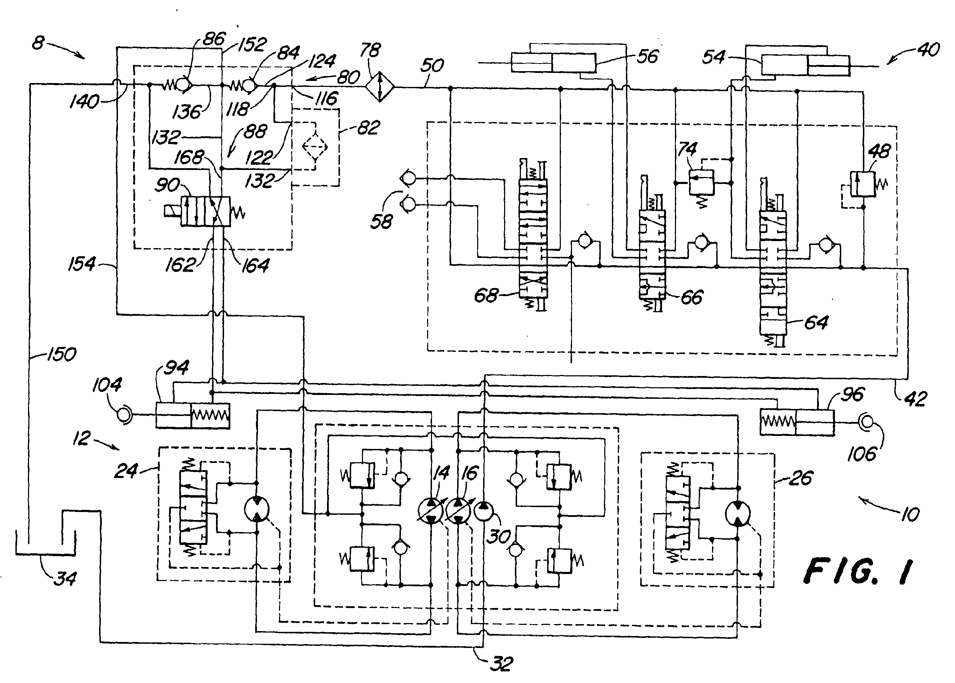

In Fig. 1 wird ein schematischer Schaltplan eines Druckmittelsystems 8 gezeigt, das an einem Fahrzeug 10 wie einem Kompaktlader genutzt werden kann. Das Fahrzeug 10 hat ein konventionelles hydrostatisches Antriebssystem 12 mit Druckmittelkreisläufen, die motorgetriebene Verstellpumpen 14 und 16 beinhalten, die mit hydrostatischen Antrieben 24 und 26 an dem Fahrzeug 10 verbunden sind. Eine Druckquelle 30 in Form einer Konstantpumpe, die eine Eingangsleitung 32 aufweist, die mit einem Reservoir oder Vorratsbehälter 34 verbunden ist, wird ebenfalls durch einen nicht gezeigten Motor angetrieben, um unter Druck stehendes Druckmittel zum Betrieb eines Druckmittelkreislaufs 40 an dem Fahrzeug 10 zur Verfügung zu stellen. Eine Versorgungsleitung 42 verbindet die Auslaßseite der Druckquelle 30 mit der Einlaßseite des Druckmittelkreislaufs 40. Ein Druckregelventil 48, das zwischen der Versorgungsleitung 42 und einer Abflußleitung 50 angeordnet ist, hält den Betriebsdruck auf einem vorgegebenen Höchstwert, welcher für das in Fig. 1 gezeigte Druckmittelsystem 8 bei ca. 206,84 bar (3000 psi) liegt.

Der Druckmittelkreislauf 40 umfaßt Hubarmzylinder 54 und Gerätezylinder 56, sowie einen zusätzlichen Ausgangsanschluß 58, der mit jeweiligen hydraulischen Regelventilen 64, 66 und 68 in Verbindung steht, um die Hubarmzylinder 54, Gerätezylinder 56 und zusätzliche Zylinder, die mit dem zusätzlichen Ausgangsanschluß 58 in Verbindung stehen, selektiv aktivieren zu können. Ein Druckentlastungsventil 74 ist zwischen einem Kolbenende des Hubarmzylinders 54 und der Abflußleitung 50 angeordnet und weist einen vorgewählten Entlastungsdruck auf, der ungefähr 10 Prozent über dem oben genannten Betriebsdruck liegt.

Die Abflußleitung 50 ist über einen Wärmetauscher 78 mit einer als Modul ausgeführten Bremssteuerungsvorrichtung 80 verbunden. Wie aus Fig. 1 hervorgeht, trägt die Bremssteuerungsvorrichtung 80 ein Filter 82 und weist ein als federbelastetes Kegelventil ausgeführtes Filterumgehungsventil 84, sowie ein Druckbegrenzungsventil 86 auf, das bei 88 einen Haltedruck von der Abflußleitung 50 zur Verfügung stellt. Die Bremssteuerungsvorrichtung 80 weist auch ein Bremssteuerventil 90 auf, das als elektromagnetisch betätigbares 4/2 Wegeventil ausgeführt ist, das den bei 88 anstehenden Haltedruck mit einer Entlastungsseite oder mit einer Belastungsseite von durch Federwirkung schließbaren und durch Druck zu öffnenden Bremsen 94 und 96, die Bremszylinder aufweisen, für Räder 104 und 106, die jeweils mit den hydrostatischen Antrieben 24 und 26 verbunden sind, selektiv verbindet. Wenn das Bremssteuerventil 90 aktiviert ist, ist ein Druck angelegt, um die Bremsen 94, 96 zu lösen. Wenn das Bremssteuerventil 90 deaktiviert ist (entsprechend der in Fig. 1 gezeigten Stellung), stellt der Federdruck, der unterstützt wird durch etwaigen Haltedruck bei 88, eine Bremskraft an den Antrieben zur Verfügung. Die federbelasteten Bremsen 94, 96 stellen eine Bremskraft sicher, wenn der Motor ausgeschaltet ist oder wenn eine elektrische oder hydraulische Fehlfunktion auftritt.

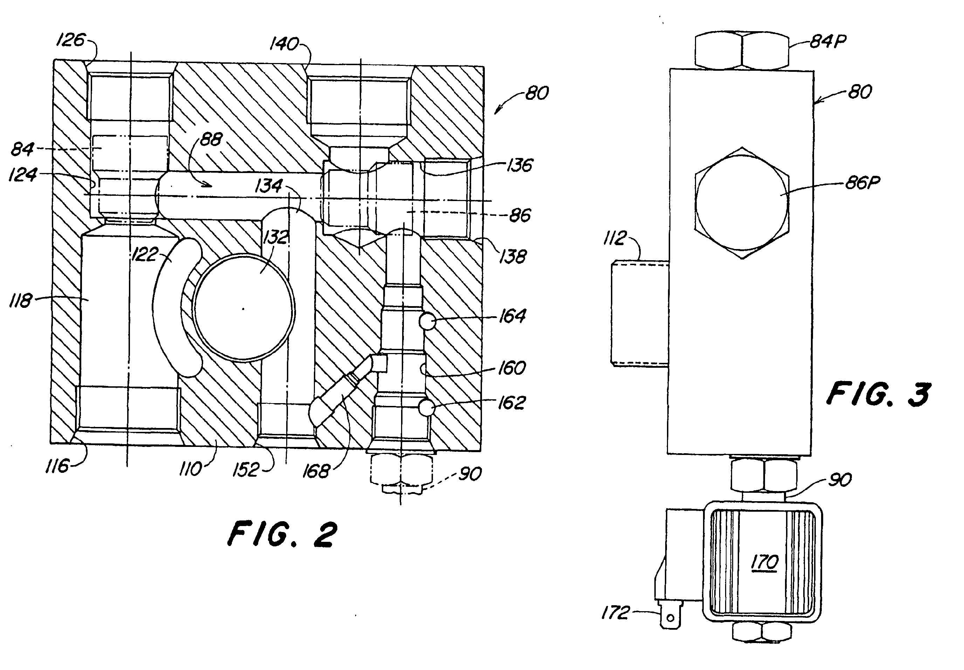

Die Bremssteuerungsvorrichtung 80 ist vorzugsweise als eine einheitliche Struktur bzw. als ein Modul, von rechteckigem, kastenartigem Aufbau ausgeführt, die einen maschinell bearbeiteten oder gegossenen Korpus 110 (Fig. 2 und 3) aufweist, der als Basis 112 für das eingeschraubte Filter 82 dient. Ein einlaßseitiger erster Anschluß 116 auf einer Seite des Korpus 110 stellt einen Pfad von der Abflußleitung 50 zu einem Hohlraum 118 zur Verfügung, der sich zu einem Filtereingangskanal 122 und zu einem Filterhohlraum 124 für das Filterumgehungsventil 84 öffnet. Ein Federkammerstopfen 84P (Fig. 3) ist in den Korpus 110 an einer Stelle 126 eingeschraubt, die dem ersten Anschluß 116 gegenüberliegt, um den Endbereich des Filterhohlraums 124 zu schließen und hält das Filterumgehungsventil 84 mit seiner Feder in seiner Stellung im Korpus 110. Wenn das Filter 82, das als Einschraubfilter ausgeführt ist, offen ist, gelangt Druckmittel in den Filtereingangskanal 122, wird durch das Filter 82 gefiltert und tritt über einen Filterausgangskanal 132 in den zentralen Filterhohlraum 134 aus. Wenn der Filterpfad geschlossen ist und der Druck an dem Filterumgehungsventil 84 einen vorbestimmten Differenzdruck (vorzugsweise in der Größenordnung von ca. 3,45 bar (50 psi)) übersteigt, wird das Filterumgehungsventil 84 öffnen, um dem Druckmittel zu erlauben, an dem Filter 82 vorbeizugelangen und direkt von der Kammer 118 zu dem Filterhohlraum 134 zu fließen.

Das Druckbegrenzungsventil 86 wird in einer Kammer 136 gehalten, welche durch einen Stopfen 86P (Fig. 3) geschlossen wird, der in eine Seite des Moduls bzw. der Bremssteuerungsvorrichtung 80 an einer Stelle 138 eingeschraubt ist. Ein Hauptteil des Druckmittels gelangt von der Abflußleitung 50 über das Druckbegrenzungsventil 86 zu einem zweiten Anschluß 140, der mit dem Vorratsbehälter 34 über eine Abflußleitung 150 verbunden ist. Das Druckbegrenzungsventil 86 stellt bei 88 einen Haltedruck zur Verfügung, wobei der Haltedruck im wesentlichen weniger als fünfundzwanzig Prozent des Systemdrucks, vorzugsweise in einer Größenordnung von ca. 10,39 - 24,13 bar (150 psi bis 350 psi) beträgt.

Ein Auffüllanschluß 152 steht mit dem Filterhohlraum 134 in Verbindung und ist mit dem Antriebssystem 12 über eine Leitung 154 verbunden, um bei Bedarf Leckage- und Bewegungsverluste in dem hydrostatischen Kreis des Antriebssystems 12 zu ersetzen. Das Druckmittel versorgt auch die Niederdruckseite des hydrostatischen Kreises um Blasenbildung/Kavitation zu verhindern.

Das elektromagnetisch betätigbare bzw. elektrohydraulische Bremssteuerventil 90 wird in einem Magnet-Ventil-Hohlraum 160 gehalten, der einen dritten und vierten als Ausgang dienenden Anschluß 162 und 164 aufweist und mit einem Kanal 168 verbunden ist, der unter Druck stehende Flüssigkeit von dem zentralen Filterhohlraum 134 liefert. Vorzugsweise ist das Bremssteuerventil 90 von solch einem Typ, wie er in der US-A-5,002,253 gezeigt und beschrieben wird, und beinhaltet einen Magnet 170 (Fig. 3) der einen Steuer- oder Regelungseingang 172 aufweist, der mit einer nicht gezeigten Steuer- oder Regelungsleitung verbunden ist. Wenn das Bremssteuerventil 90 aktiviert wird, indem Spannung durch den Steuer- oder Regelungseingang 172 geliefert wird, ist der vierte Anschluß 164 zu dem Haltedruck bei 88 geöffnet, um die Bremsen 94 und 96 gegen die Wirkung der Federn zum Öffnen zu zwingen. Wenn der Regelungseingang 172 nicht beaufschlagt wird, kehrt das Bremssteuerventil 90 in seine in Fig. 1 gezeigte Stellung zurück, in der der Federdruck und der bei 88 anstehende Haltedruck eine Bremskraft für die Bremsen 94, 96 zur Verfügung stellen.

## Patentansprüche

1. Bremssystem mit einer Bremssteuerungsvorrichtung (80) mit wenigstens einem ersten Anschluß (116) für eine Druckquelle (30), einem zweiten Anschluß (140) für eine Abflußleitung (150) und einem dritten Anschluß (162, 164) für wenigstens eine druckmittelbetätigbare Bremse (94, 96) und mit einem Filterungehungsventil (84) sowie einem Drückbegrenzungsventil (86), welches Druckbegrenzungsventil (86) in einer Verbindung zwischen dem ersten Anschluß (116) und dem zweiten Anschluß (140) angeordnet ist, wobei der erste Anschluß (116) und der dritte Anschluß (162, 164) stromaufwärts des Druckbegrenzungsventils (86) liegen, und welches in der Bremssteuerungsvorrichtung (80) einen Haltedruck aufrechterhält.

2. Bremssystem nach Anspruch 1, **dadurch gekennzeichnet, daß** die Bremse (94, 96) zumindest einen federbelasteten und/oder doppeltwirkenden Bremszylinder aufweist.

3. Bremssystem nach einem oder mehreren der vorherigen Ansprüche, **dadurch gekennzeichnet, daß** die Bremssteuerungsvorrichtung (80) zumindest ein vorzugsweise elektromagnetisch betätigbares Bremssteuerventil (90) aufweist, das zwischen dem ersten Anschluß (116) und dem dritten Anschluß (162, 164) angeordnet ist.

4. Bremssystem nach einem oder mehreren der vorherigen Ansprüche, **dadurch gekennzeichnet, daß** die Bremssteuerungsvorrichtung (80) einen vierten Anschluß (164) aufweist, der mit der Bremse (94, 96) vorzugsweise über das Bremssteuerventil (90) verbindbar ist und/oder stromabwärts von dem Druckbegrenzungsventil (86) angeordnet ist.

5. Bremssystem nach einem oder mehreren der vorherigen Ansprüche, **dadurch gekennzeichnet, daß** die Bremssteuerungsvorrichtung (80) in der Art eines Moduls ausgebildet ist.

6. Bremssystem nach einem oder mehreren der vorherigen Ansprüche, **dadurch gekennzeichnet, daß** die Bremssteuerungsvorrichtung (80) ein Filter (82) aufweist, das vorzugsweise als ein an dem Modul anbringbares Einschraubfilter ausgeführt ist.

7. Bremssystem nach einem oder mehreren der vorherigen Ansprüche, **dadurch gekennzeichnet, daß** die Bremssteuerungsvorrichtung (80) einen Auffüllanschluß (152) aufweist, der stromaufwärts des Druckbegrenzungsventils (86) liegt und durch den einem Antriebssystem (12) Druckmittel zugeführt werden kann.

8. Fahrzeug, vorzugsweise ein landwirtschaftliches oder industrielles Arbeitsfahrzeug wie beispielsweise ein Kompaktlader mit einem Druckmittelsystem (10), das zumindest eine Druckquelle (30), eine Abflußleitung (150) und eine druckmittelbetätigbare Bremse (94, 96) aufweist, **gekennzeichnet durch** ein Bremssystem mit einer Bremssteuerungsvorrichtung (80) nach einem oder mehreren der vorherigen Ansprüche.

9. Fahrzeug nach Anspruch 8, **dadurch gekennzeichnet, daß** das Druckmittelsystem (10) zumindest einen offenen Druckmittelkreislauf (40) aufweist und/oder daß die Druckquelle (30) eine Konstantpumpe ist.

10. Fahrzeug nach Anspruch 8 oder 9, **dadurch gekennzeichnet, daß** das Druckmittelsystem (10) zumindest einen geschlossenen Druckmittelkreislauf aufweist und/oder daß das Bremssystem (80) über einen Auffüllanschluß (152) mit dem geschlossenen Druckmittelkreislauf verbindbar ist.

## Revendications

1. Système de freinage comportant un dispositif de commande de frein (80) avec au moins un premier raccord (116) pour une source de pression (30), un deuxième raccord (140) pour une conduite d'évacuation (150) et un troisième raccord (162, 164) pour au moins un frein (94, 96) apte à être actionné par un fluide sous pression, et comportant une vanne de bipasse de filtre (84), ainsi qu'une vanne de limitation de pression (86), laquelle vanne de limitation de pression (86) est agencée dans une liaison entre le premier raccord (116) et le deuxième raccord (140), le premier raccord (116) et le troisième raccord (162, 164) étant disposés en amont de la vanne de limitation de pression (86), et laquelle maintient une pression de retenue dans le dispositif de commande de frein (80).

2. Système de freinage selon la revendication 1, **caractérisé en ce que** le frein (94, 96) comporte au moins un cylindre de frein sollicité par ressort et/ou à double effet.

3. Système de freinage selon une ou plusieurs des revendications précédentes, **caractérisé en ce que** le dispositif de commande de frein (80) comporte au moins une vanne de commande de frein (90), qui peut être actionnée de préférence par voie électromagnétique et qui est agencée entre le premier raccord (116) et le troisième raccord (162, 164).

4. Système de freinage selon une ou plusieurs des revendications précédentes, **caractérisé en ce que** le dispositif de commande de frein (80) comporte un quatrième raccord (164), qui peut être relié au frein (94, 96), de préférence par l'intermédiaire de la vanne de commande de frein (90), et/ou qui est agencé en aval de la vanne de limitation de pression (86).

5. Système de freinage selon une ou plusieurs des revendications précédentes, **caractérisé en ce que** le dispositif de commande de frein (80) est conçu sous forme de module.

6. Système de freinage selon une ou plusieurs des revendications précédentes, **caractérisé en ce que** le dispositif de commande de frein (80) comporte un filtre (82), qui est conçu, de préférence, sous forme de filtre avec un filetage, destiné à être monté sur le module.

7. Système de freinage selon une ou plusieurs des revendications précédentes, **caractérisé en ce que** le dispositif de commande de frein (80) comporte un raccord d'alimentation (152), qui est disposé en amont de la vanne de limitation de pression (86) et par lequel le fluide sous pression peut être acheminé vers un système d'entraînement (12).

8. Véhicule, de préférence véhicule de travail agricole ou industriel, tel qu'une chargeuse compacte, comportant un système de fluide sous pression (10), qui comporte au moins une source de pression (30), une conduite d'évacuation (150) et un frein (94, 96), apte à être actionné par un fluide sous pression, **caractérisé par** un système de freinage comportant un dispositif de commande de frein (80) selon une ou plusieurs des revendications précédentes.

9. Véhicule selon la revendication 8, **caractérisé en ce que** le système de fluide sous pression (10) comporte au moins un circuit ouvert pour le fluide sous pression (40) et/ou **en ce que** la source de pression (30) est une pompe à cylindrée constante.

10. Véhicule selon la revendication 8 ou 9, **caractérisé en ce que** le système de fluide sous pression (10) comporte au moins un circuit fermé pour le fluide sous pression et/ou **en ce que** le système de freinage (80) peut être relié au circuit fermé du fluide sous pression par l'intermédiaire d'un raccord d'alimentation (152).

## Claims

1. A brake system with a brake control device (80) with at least one first port (116) for a pressure source (30), a second port (140) for a drain line (150) and a third port (162, 164) for at least one brake (94, 96) which can be actuated by a medium under pressure, and with a filter bypass valve (84) as well as a pressure limiting valve (86), which pressure limiting valve (86) is located in a connection between the first port (116) and the second port (140), wherein the first port (116) and the third port (162, 164) lie upstream of the pressure limiting valve (86), which maintains a holding pressure in the brake control device (80).

2. A brake system according to claim 1, **characterized in that** the brake (94, 96) has at least one spring biased and/or double acting brake cylinder.

3. A brake system according to one or more of the preceding claims, **characterized in that** the brake control device (80) comprises at least one preferably electromagnetically actuated brake control valve (90) which is located between the first port (116) and the third port (162, 164).

4. A brake system according to one or more of the preceding claims, **characterized in that** the brake control device (80) has a fourth port (164) which can be connected to the brake (94, 96), preferably through the brake control valve (90), and/or is disposed downstream of the pressure limiting valve (86).

5. A brake system according to one or more of the preceding claims, **characterized in that** the brake control device (80) is formed in the nature of a module.

6. A brake system according to one or more of the preceding claims, **characterized in that** the brake control device (80) comprises a filter (82) which is preferably in the form of a screw-on filter attachable to the module.

7. A brake system according to one or more of the preceding claims, **characterized in that** the brake control device (80) has a filling port (152) which lies upstream of the pressure limiting valve (86) and through which pressure medium can be fed to a drive system (12).

8. A vehicle, preferably an agricultural or industrial work vehicle such as a compact loader for example, with a pressure medium system (10) which comprises at least one pressure source (30), a drain line (150) and a brake (94, 96) operable by a pressure medium, **characterized by** a brake system with a brake control device (80) according to one or more of the preceding claims.

9. A vehicle according to claim 8, **characterized in that** the pressure medium system (10) comprises at least one open pressure medium circuit (40) and/or that the pressure source (30) is a constant volume pump.

10. A vehicle according to claim 8 or 9, **characterized in that** the pressure medium system (10) comprises at least one closed pressure medium circuit and/or that the brake system (80) can be connected to the closed pressure medium circuit through a filling port (152).
